**Europäisches Patentamt**

**European Patent Office**

**Office européen des brevets**

(19)

(11) Veröffentlichungsnummer: **0 495 386 A1**

## (12) EUROPÄISCHE PATENTANMELDUNG

(21) Anmeldenummer: **92100223.4**

(22) Anmeldetag: **09.01.92**

(51) Int. Cl.5: **B01D 17/025**, B01D 17/038, B01D 21/06, B01D 21/26

(30) Priorität: **17.01.91 DE 4101173**
**14.01.91 DE 4100822**

(43) Veröffentlichungstag der Anmeldung:
**22.07.92 Patentblatt 92/30**

(84) Benannte Vertragsstaaten:
**AT BE CH DE DK ES FR GB IT LI LU NL**

(71) Anmelder: **PASSAVANT-WERKE AG**

**W-6209 Aarbergen 7(DE)**

(72) Erfinder: **Bachon, Ulrich, Dipl.-Ing.**
**Wilhelmstrasse 59**
**W-6252 Diez(DE)**
Erfinder: **Weiler, Walter, Dipl.-Ing.**
**Wilhelmstrasse 59**
**W-6252 Diez(DE)**
Erfinder: **Loseries, Hans Georg**
**Louise-Seherstrasse 24a**
**W-6252 Diez(DE)**

(54) **Verfahren zum Abscheiden von Schwimm- und Sinkstoffen aus Abwässern.**

(57) Die Abscheidung von Schwimm- und Sinkstoffen aus in Lebensmittel verarbeitenden Betrieben und Küchen anfallenden Abwässern wechselnder Temperatur wird dadurch verbessert, daß der langen, horizontal durchströmten Beruhigungsstrecke eine unter stetiger Strömungsverlangsamung ebenfalls horizontal durchflossene Trennstrecke vorgeschaltet ist, in der die die Schwimmstoffe enthaltenden heißen Abwasseranteile nach oben und die die Sinkstoffe enthaltenden kalten Abwasseranteile nach unten geschichtet und dann als Schichtströmung in die Beruhigungsstrecke eingeleitet werden. Die Beruhigungsstrecke ist vorzugsweise ein sehr langsam durchströmtes, vertikalachsig rotierendes Abwasservolumen, an dessen oberer und unterer Begrenzung die geschichteten Abwasseranteile gesammelt und abgezogen werden, Insbesondere die Öle und Fette können auf diese Weise in frischem Zustand in kurzen Zeitabständen abgezogen und einer Wiederverwertung zugeführt werden.

Fig.1

EP 0 495 386 A1

Die Erfindung bezieht sich auf die Abscheidung von Schwimm- und Sinkstoffen aus diese Stoffen führenden Abwässern unterschiedlicher Wärmegrade.

In Lebensmittel verarbeitenden und Speisen zubereitenden Betrieben werden große Mengen an Spül- und Reinigungswasser gebraucht. Bei Gar- und Kochvorgängen und der Reinigung von Koch- und Speisegeräten fallen mit Ölen und Fetten befrachtete heiße Abwässer an. Die bei der Speisenvorbereitung und in Kartoffelschälmaschinen anfallenden Waschwässer sind kalt und enthalten Sinkstoffe, die abgeschieden werden müssen. Es ist bekannt, diese Abwässer durch eine Kombination aus Sinkstoff- und Schwimmstoffabscheidern zu leiten. Diese Abscheider sind durch Normung ausreichend bemessen. Es gibt auch schon Abscheider, in denen die Schwimm- und Sinkstoffe gleichzeitig abgetrennt und durch Dichteunterschiede an den beiden Grenzflächen der Beruhigungsstrecke zum Abzug gesammelt werden (DE-GM 86 25 464). Kennzeichen eines solchen Kombinationsabscheiders ist die höhenmittige Zu- und Ableitung des Abwassers. Das zulaufende Abwasser wird gebremst und auf den größten Teil des Fließquerschnitts gespreizt.

Diese Spreizung auf den Gesamtfließquerschnitt hat den Nachteil, daß die Abwässer unabhängig von ihrer Temperatur und der Art der Abwasserinhaltsstoffe in alle Höhenbereiche der Beruhigungsstrecke gelenkt werden. Es tritt eine derart starke Vermischung ein, daß die Wege der Abwasserinhaltsstoffe zu der jeweiligen Grenzfläche zu lang sind und es demnach nicht zur wirksamen Abtrennung kommt. Die Ablaufwerte sind zu hoch, und es müssen weitere teure Maßnahmen zur Einhaltung der Grenzwerte ergriffen werden.

Die Aufgabe, den Abscheidegrad von beiden Arten von Abwasserinhaltsstoffen entscheidend zu verbessern, ohne zusätzliche Abscheidemaßnahmen ergreifen zu müssen, wird überraschenderweise auf die erste Weise dadurch gelöst, daß der ohne Prall- bzw. Spreizeinrichtung ausgebildeten Beruhigungsstrecke eine ebenfalls horizontal unter stetiger Strömungsverlangsamung durchflossene Trennstrecke vorgeschaltet ist, in der die die Schwimmstoffe enthaltenden warmen Abwässer nach oben und die die Sinkstoffe enthaltenden kalten Abwässer nach unten geschichtet und dann als Schichtströmung in die entsprechenden Höhenabschnitte der Beruhigungsstrecke eingeleitet werden. Es werden hier also die Dichteunterschiede der unterschiedlich warmen Abwässer dazu ausgenutzt, eine Schichtung vorzunehmen. Die Abwasserinhaltsstoffe gelangen bereits in den Höhenbereich der Beruhigungsstrecke, der ihrer Abtrennbewegung entspricht. Die Abtrennwege bis zur Grenzschicht sind wesentlich kürzer. Der Zulauf der Schichtströmung erfolgt unter Verdrängung eines gleich großen Volumens an gereinigtem Abwasser aus der Beruhigungsstrecke. Diese Verdrängung ist im wesentlichen wirbelfrei, so daß keine abscheideschädliche Vermischung des Zulaufvolumens eintreten kann. Die Trennstrecke wird vorzugsweise als ablösungsfrei konisch erweiterte Rohrstrecke ausgebildet, wobei der Konuswinkel für den kalten die Sinkstoffe enthaltenden Abwasserstrom größer ist als für den warmen, entsprechend der größeren Abtrennungsgeschwindigkeit. Der Zulauf in die Beruhigungsstrecke kann dann oberhalb der Höhenmitte liegen.

Der Gedanke der Temperaturschichtung kann auch durch ein Verfahren verwirklicht werden, das erfindungsgemäß dadurch gekennzeichnet ist, daß das Abwasservolumen auf der Beruhigungsstrecke in eine stetig langsam vertikalachsig rotierende Bewegung versetzt wird, daß das Abwasser mit etwa der Rotationsgeschwindigkeit tangential und in mittlerer Höhe in das rotierende Volumen eingeleitet wird, wobei die Durchströmgeschwindigkeit bis zum Auslauf durch Bemessung des Volumens der Beruhigungsstrecke so eingestellt ist, daß sich der die Sinkstoffe enthaltende kalte Abwasserzulauf während der Aufenthaltszeit im unteren Bereich und der die Schwimmstoffe enthaltende warme Abwasserzulauf im oberen Bereich der Beruhigungsstrecke schichtet und daß die in den Schichtströmen enthaltenen Stoffe sich an den jeweiligen Grenzflächen der Beruhigungsstrecke sammeln und von dort abgezogen werden. Hier findet demnach die wirbelfreie Schichtung in der Beruhigungsstrecke selbst statt, die dazu ausreichend lang bemessen ist. Durch die tangentiale Einleitung findet auch hier eine vermischungsfreie Verdrängung eines gereinigten Wasservolumens statt. Man kann die gereinigten Abwasserströme aus der Beruhigungsstrecke jeweils in der geschichteten Höhe abziehen. Vorteilhafter ist es jedoch, nur einen Abzug vorzusehen, der ungefähr in Höhenmitte liegt. Dort befindet sich nur fertig gereinigtes Abwasser. Der Ablauf wird vorzugsweise etwa ins Zentrum des rotierenden Abwasservolumens gelegt, so daß ein sehr langer spiraliger Weg für die Temperaturschichtung des Abwasserzulaufs und die anschließende Abtrennung vorhanden ist.

Vorzugsweise wird das Abwasservolumen in der Beruhigungsstrecke durch Krählelemente oder dgl. in der langsamen Rotationsbewegung gehalten.

Bei Ölen und Fetten, aber auch bei Stärke und sonstigen organischen Stoffen, kommt es darauf an, eine Gärung zu verhindern. Die durch langen Aufenthalt im Abscheider verbliebenen Fettstoffe gehen in Fettsäuren über und können nicht mehr aufbereitet werden. Es besteht daher der Zwang, die abgeschiedenen Stoffe in kurzen Zeitabständen frisch und mit möglichst wenig Wasseranteil abzuziehen. Bei dem erfindungsgemäßen Verfahren gelingt dies dadurch, daß die Sink- und Schwimmstoffe bei ihrer Abtrennbewegung jeweils in Abtrennrichtung konisch räumlich konzentriert und an der Engstelle der Konzentration abgezogen werden. Bei dem Abschnitt der Beruhigungsstrecke, der die warmen Abwässer mit den Schwimmstoffen aufnimmt, ist es sinnvoll, das Abwasser bis zum Abzug der Schwimmstoffe auf der Zulauftemperatur zu halten, z.B. durch Wärmeisolierung nach außen. Dadurch bleiben die Schwimmstoffe bis zuletzt flüssig und können besser konzentriert und vollständig abgezogen werden. Die Wärmeschichtung bleibt voll erhalten.

Es hat sich gezeigt, daß die Abscheidung der Leichtstoffe und ihre Eindickung besser ist, wenn sie möglichst lange flüssig gehalten und noch in diesem Zustand abgezogen werden. Beim Konzentrieren tritt auch eine Entlüftung ein, so daß zusammen mit der Verringerung der freien Oberfläche die Zersetzung der organischen Leichtstoffe hinausgezögert wird.

Vorteilhafter ist es ferner, wenn das Prinzip der räumlichen Zusammenziehung und Eindickung auch auf die Sinkstoffe angewendet wird.

Weiter Ausgestaltungsmerkmale des erfindungsgemäßen Verfahrens und mehrere zur Durchführung des Abscheideverfahrens geeignete Vorrichtungen werden nachfolgend anhand der Zeichnungen beschrieben. Die Zeichnungen zeigen:

Fig. 1     eine erste Ausführungsform in detaillierter, teilweise geschnittener Seintenansicht,

Fig. 2     die Draufsicht zu Fig. 1

Fig. 3     eine zweite Ausführungsform mit symmetrisch ausgebildetem Boden und Deckel in Konusform in etwas schematisierter Darstellung

Fig. 4     eine dritte Abscheiderausführung mit einem dem Leichtstoffaustrag dienenden horizontalen Schneckenförderer, und

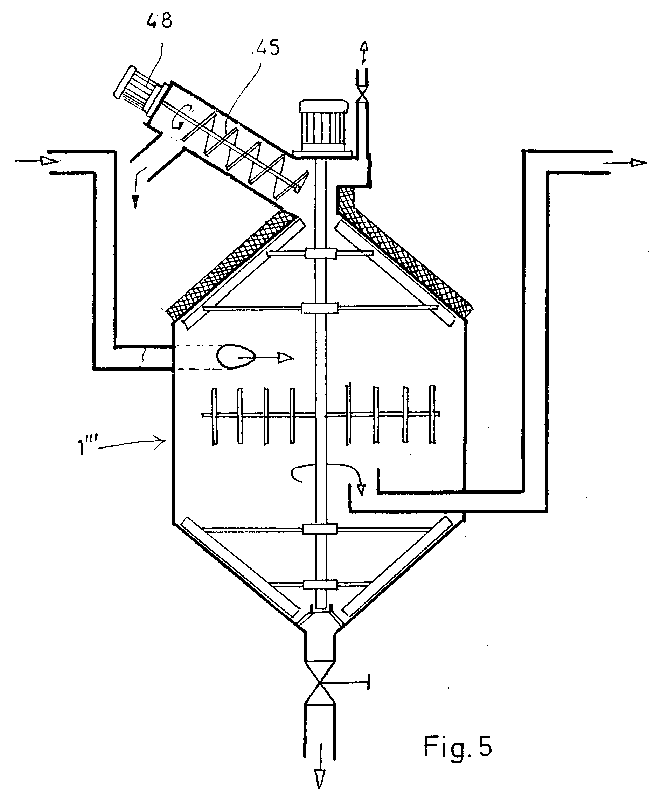

Fig. 5     eine letzte Variante, bei der die Austragsschnecke schräg ansteigt und einen eigenen Antrieb hat.

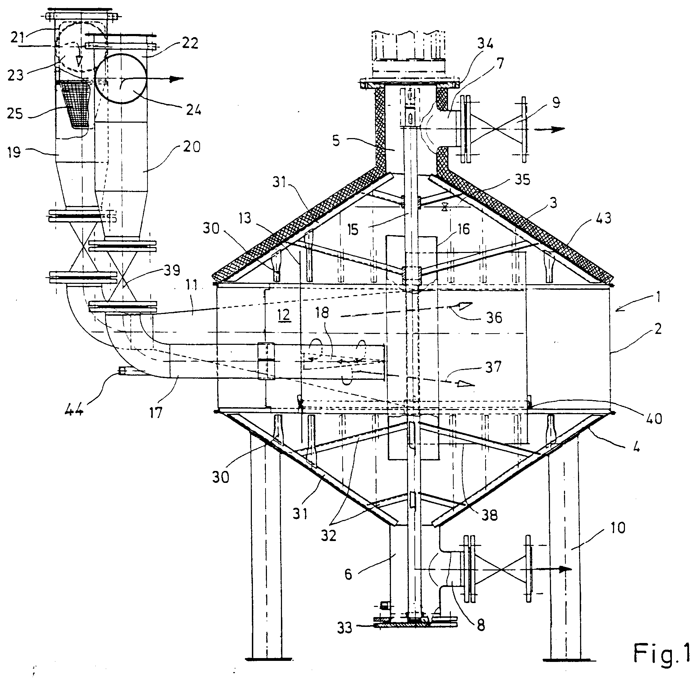

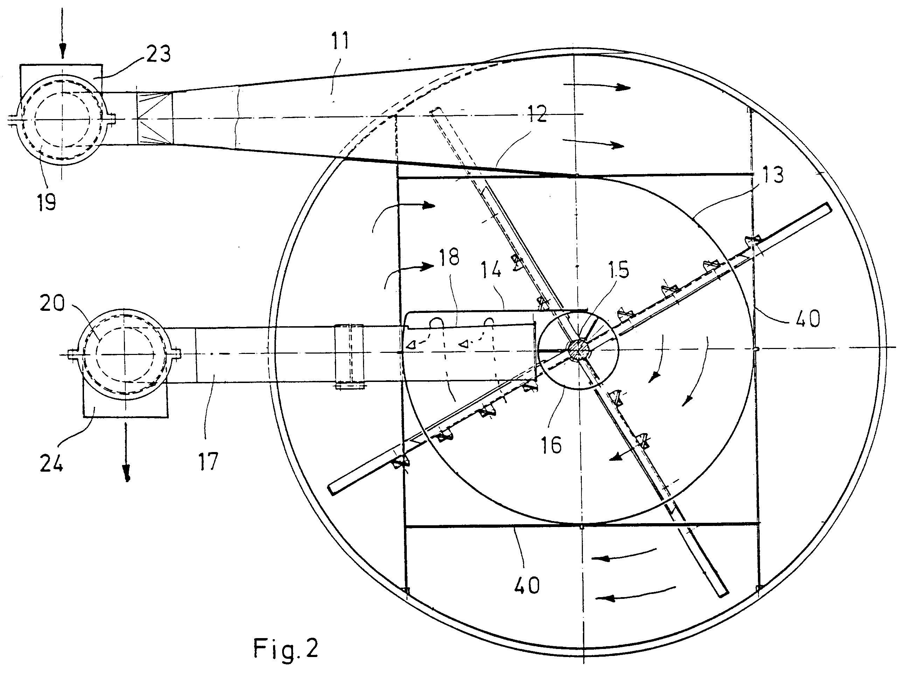

Der Abscheidebehälter 1 Nach Fig. 1 besteht aus einem zylindrischen Mittelteil 2 und zwei konischen Böden bzw. Deckeln 3, 4. An die Spitzen der Deckel sind Ablaufrohrstutzen 5, 6 in T-Form mit seitlichem Abzweig 7, 8 angesetzt, an den Verschlußschieber 9, 10 angeschlossen sind. In den zylindrischen Behälterteil 2 mündet tangential ein sich konisch erweiternder Zulaufstutzen 11 (Fig.2). Im Behälterinneren setzt sich die innere Wand des Konus in Form einer Leitwand 12 fort. An diese Leitwand 12 schließt sich ein sich über einen Dreiviertelkreis erstreckendes konzentrisches Leitblech 13 an, das in der Höhe noch etwas in die konischen Deckel ragt. Am Ende des konzentrischen Leitblechs 13 ist ein Prallblech 14 zum Behälterzentrum angewinkelt, das tangential an einem die Krählwerkswelle 15 umgebenden Rohr 16 endet. Das Prallblech 14 erstreckt sich nur entlang dem Mittelteil des Abscheidebehälters, während das Rohr 16 noch weiter als das konzentrische Leitblech 13 in die Deckel ragt. Alle eine Baueinheit bildenden Leit- und Prallwände sind auf den Behälter durchquerenden Stützstäben 40 aufgelagert. Es wird weiter unten erläutert, warum diese Wände unterschiedliche Höhe haben.

Vor dem Prallblech 14 ist der etwas unterhalb der Höhenmitte liegende Ablaufstutzen 17 radial verlaufend angeordnet. Er besitzt auf der dem Prallblech 14 zugewandten Seite einen keilförmigen Einlaufschlitz 18, der bewirkt, daß das Abwasservolumen stets als Ganzes rotiert und über den Radius eine lineare Geschwindigkeitsverteilung herrscht, bei der die Aufenthaltszeit für jeden Stromfaden gleich ist.

Zu- und Ablaufstutzen 19, 20 sind über einen Krümmer nach oben gezogen und mit je einem T-Stück 21, 22 abgeschlossen. Die horizontalen Abzweige 23, 24 sind dabei in der Höhe so ausgerichtet, daß sich auf Grund des statischen Druckunterschieds eine gewollte Durchströmgeschwindigkeit ergibt. Es ist weiterhin zu erkennen, daß der Ablauf 24 so hoch liegt, daß der Abscheidebehälter voll geflutet und ohne Freispiegel betrieben wird. Im Zulaufstutzen 19 ist ein Grobschmutz-Fangkorb 25 eingehängt, der zur Entleerung durch den gedeckelten oberen Abzweig 26 des T-Stücks 21 entnommen werden kann.

In den konischen Deckeln sind Krählstäbe 30 und Räumschilde 31 angeordnet, die über Speichen 32 an der zentralen Krählwerkswelle 15 befestigt sind. Die innerhalb des konzentrischen Leitblechs liegenden Krählstäbe können das niedrige Prallblech oben und unten passieren. Die Räumschilde 31 wirken zum Auslauf hin fördernd und verhindern, daß sich die abgetrennten Stoffe auf den geneigten Deckelflächen festsetzen. Die Krählwerkswelle 15 ist im Deckelflansch 33 des unteren T-Stücks 6 gelagert. Der (nicht dargestellte) Antriebsmotor wird mit dem oberen Flansch 34 des oberen T-Stücks verschraubt. Dieses T-Stück und der zugehörige Konus-Deckel sind nach außen durch eine Isolierschicht 43 wärmeisoliert. Die sich dort etwa bis zur Trennlinie 35 ansammelnden Schwimmstoffe bleiben auf Grund der mit dem warmen Abwasserstrom zugeführten Wärme bis zum Abzug flüssig und abgetrennt. Außerdem haben die Schwimmstoffe selber eine schlechte Wärmeleitfähigkeit. Die Schwimmstoffe bleiben weiterhin fließfähig und verdrängen etwa eingeschlossenes Wasser größtenteils nach unten, so daß sie im wesentlichen wasserfrei abgezogen werden können. Unter der Isolierschicht 43 kann eine Heizmanschette vorgesehen werden, die den Wärmeverlust in den Stillstandszeiten ausgleicht. Die Manschette kann elektrisch oder mit Heißwasser beheizt werden.

Im Betrieb des Abscheiders läuft das Krähl- und Räumwerk ständig langsam um. Das zulaufende Abwasser wird in dem konischen Zulaufstutzen 11 auf die Rotationsgeschwindigkeit verlangsamt und hat dabei Gelegenheit, sich in derjenigen Höhenlage zu schichten, die seinem Dichteunterschied auf Grund der Abwassertemperatur entspricht. Warmes Abwasser wird also entlang dem Pfeil 36 und kaltes Abwasser in Pfeilrichtung 37 in den Abscheidebehälter eintreten. Es durchläuft dann den äußeren Kreisringraum und wird an seinem Ende entlang der Leitwand 12 in den inneren Kreisringraum geführt. Nach zwei fast vollständigen Umläufen verläßt es dann den Abscheider durch den Auslaufschlitz 18, wobei hier erst im letzten Augenblick die Strömungslinien durch eine Geschwindigkeitstransformation zusammengezogen wird.

Auf dem langen Spiralweg haben die Abwasserinhaltsstoffe ausreichend Gelegenheit, sich von dem Wasser abzutrennen. Dabei wird durchaus noch Wasser mitgeschleppt, das dann auch noch über bzw. unter die Leitwände gelangen und dort ungehindert weiter rotieren kann. Es wird erst durch neu hinzukommendes Abscheidegut zum Auslauf hin verdrängt. Es ist vorgesehen, die Sinkstoffe höchstens bis zu der Trennlinie 38 ansteigen zu lassen, damit dieser Effekt noch eintreten kann. Durch das in den konischen Deckeln rotierende Abwasservolumen werden auf die Stoffe Zentrifugalkräfte ausgeübt, die zusammen mit den Schwerkräften eine Abscheidebewegung zur Wand des Deckels und damit in den Bereich der Räumschilde bewirken.

Zum Abzug der abgeschiedenen Stoffe werden Schmutzwasserzulauf und Reinwasserablauf (Ventil 39) geschlossen und der entsprechende Ablaßschieber (9 oder 10) geöffnet. Durch Zufuhr von Förderwasser in den Druckstutzen 44 kann der Abzug unterstützt werden. Kontrolliert wird der Abzug durch Schaugläser.

Zu- und Ablauf 23, 24 sind in der Höhe gegenüber dem Leichtstoffabzug 7 derart angeordnet, daß die Leichtstoffe beim Öffnen des Schiebers 9 zum Teil auch schon selbsttätig austreten. Damit der Austritt leicht vonstatten geht und ablaufseitig keine Heberwirkung eintritt, sind Zu- und Ablauf und Leichtstoffabzug an eine nicht dargestellte gemeinsame Entlüftung angeschlossen. Diese Entlüftung kann besaugt werden, so daß es zu keiner Geruchbelästigung kommen kann.

Da die Fertigung der konischen Deckel nicht präzise rotationssymmetrisch sein kann, wird vorgeschlagen, die Innenflächen der Deckel mit einer pastösen erstarrenden Beschichtung zu versehen und diese von den eingebauten Räumschilden durch Rotation glattstreichen zu lassen.

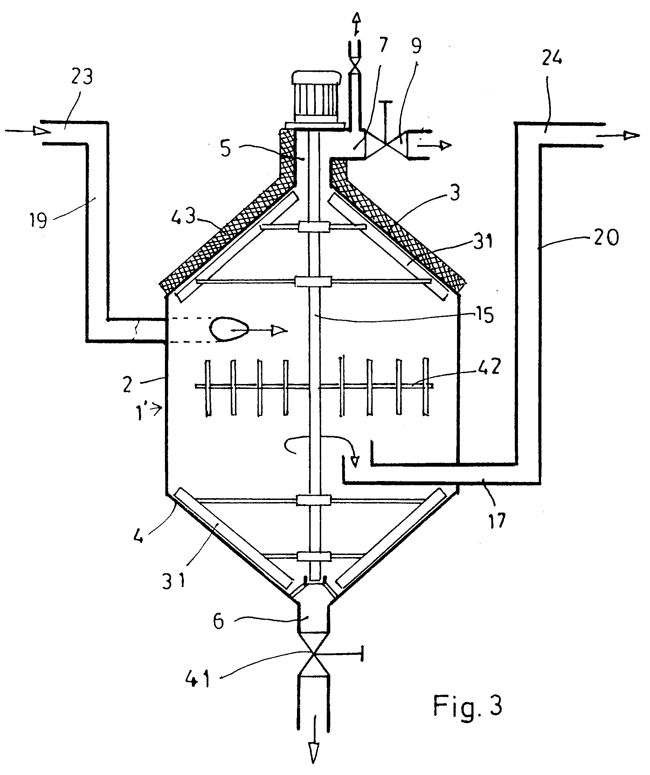

Der Abscheider 1' nach Fig. 3 hat erhöhte Zu- und Abläufe 23, 24, so daß in den oberen Konusdeckel 3 aufsteigenden Leichtstoffe selbsttätig aus dem Abzug 7 austreten können. Der Konusdeckel 3 ist außen wärmeisoliert (43), so daß die Leichtstoffe auf Grund ihrer Eigenwärme und schlechten Wärmeleitfähigkeit bis zum Abzug flüssig bleiben. Ein von oben angetriebenes Krählwerk 15 mit Krählschaufeln 31 sorgt dafür, daß die Leichtstoffe während ihres Anstiegs zum Abzug 7 noch entwässert, also eingedickt werden und ohne Ablagerungen vollständig dorthin gelangen. Auch die Abzugsleitung kann noch wärmeisoliert sein.

Der Absetzbereich für die Sinkstoffe ist hier ebenfalls als Konusboden 4 ausgeführt. Dort läuft ebenfalls ein Krählwerk 31 um, das die Sinkstoffe entwässert und weiterfördert. Die Sinkstoffe werden im Gegensatz zu den Leichtstoffen durch das Ventil 41 diskontinuierlich abgezogen.

Im zylindrischen Bereich des Abscheidegefäßes 1' liegt ein aus Krählarmen und Krählstangen bestehendes Krählwerk 42, das den Abscheiderinhalt in langsamer Rotationsbewegung hält und damit die Abtrennung beider Stoffgruppen begünstigt.

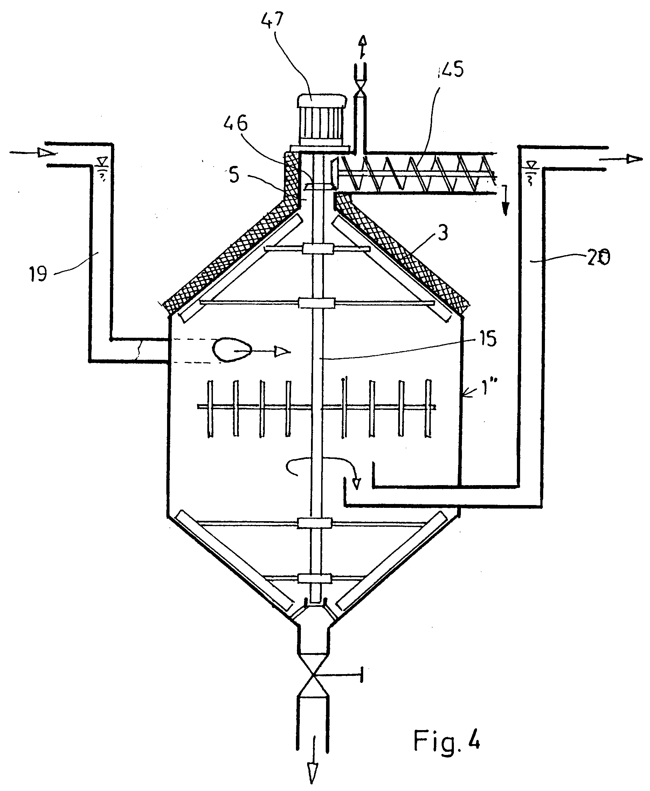

Bei dem Abscheider 1'' nach Fig. 4 werden die in dem Abzugsschacht 5 aufsteigenden Leichtstoffe von einer horizontal angeordneten Förderschnecke 45 erfaßt und ausgetragen. Die Förderschnecke wird über ein Kegelradgetriebe 46 vom Antrieb 47 des Krählwerks 15 mit angetrieben.

Bei dem Leichtstoffabscheider 1''' nach Fig., 5 verläuft die Förderschnecke 45' schräg aufwärts und ist mit einem eigenen Antrieb 48 versehen. Auf dem über dem Leichtstoffspiegel liegenden Förderabschnitt werden die Leichtstoffe entwässert.

**Patentansprüche**

1. Verfahren zum Abscheiden von Schwimm- und Sinkstoffen aus in Lebensmittel verarbeitenden oder Speisen zubereitenden Betrieben anfallenden Abwässern wechselnder Wärmegrade durch Einleiten der Abwässer in eine im wesentlichen laminar durchströmte horizontale Beruhigungsstrecke, in der die Abwasserinhaltsstoffe Gelegenheit bekommen, sich durch Dichteunterschiede vertikal zu bewegen und an den beiden Grenzflächen der Beruhigungsstrecke zu sammeln, **dadurch gekennzeichnet**, daß der Beruhigungsstrecke eine ebenfalls horizontal unter stetiger Strömungsverlangsamung durchflossene Trennstrecke vorgeschaltet ist, in der die die Schwimmstoffe enthaltenden warmen Abwässer nach oben und die die Sinkstoffe enthaltenden kalten Abwässer nach unten geschichtet und dann als Schichtströmung in die entsprechenden Höhenabschnitte der Beruhigungsstrecke eingeleitet werden.

2. Verfahren nach Anspruch 1, **dadurch gekennzeichnet,** daß die Trennstrecke als ablösungsfrei konisch erweiterte Rohrstrecke ausgebildet ist.

3. Verfahren nach Anspruch 2, **dadurch gekennzeichnet**, daß der Konuswinkel für die kalte untere Schichtströmung größer ist als für die obere.

4. Verfahren nach Anspruch 1, 2 oder 3, **dadurch gekennzeichnet**, daß die Schichtströmungen in der Trenn- und/oder Beruhigungsstrecke durch Leitvorrichtungen gegeneinander getrennt werden.

5. Verfahren zum Abscheiden von Schwimm- und Sinkstoffen aus in Lebensmittel verarbeitenden oder Speisen zubereitenden Betrieben anfallenden Abwässern wechselnder Wärmegrade durch Einleiten der Abwässer in eine im wesentlichen laminar horizontal durchströmte Beruhigungsstrecke, in der die Abwasserinhaltsstoffe Gelegenheit bekommen, sich durch Dichteunterschiede vertikal zu bewegen und an den Grenzflächen der Beruhigungsstrecke zu sammeln, **dadurch gekennzeichnet**, daß das Abwasservolumen in der Beruhigungsstrecke in eine stetig langsam vertikalachsige rotierende Bewegung versetzt wird; daß das Abwasser mit etwa der Rotationsgeschwindigkeit tangential und in mittlerer Höhe in das rotierende Volumen eingeleitet wird, wobei die Durchströmgeschwindigkeit bis zum Auslauf durch Bemessung des Abscheidevolumens so eingestellt ist, daß sich der die Sinkstoffe enthaltende kalte Abwasserzulauf während der Aufenthaltszeit im unteren Bereich und der die Schwimmstoffe enthaltende warme Abwasserzulauf im oberen Bereich der Beruhigungsstrecke schichtet, und daß die in den Schichtströmen enthaltenen Stoffe sich an der jeweiligen Grenzfläche der Beruhigungsstrecke sammeln und von dort abgezogen werden.

6. Verfahren nach Anspruch 1 bis 5, **dadurch gekennzeichnet**, daß die Schichtströmungen aus der Beruhigungsstrecke in der jeweils erreichten Höhe abgezogen werden.

7. Verfahren nach Anspruch 1 bis 5, **dadurch**

**gekennzeichnet,** daß die Abwässer in der Beruhigungsstrecke auf einem spiralig von außen nach innen durchlaufenen Weg geführt und etwa im Zentrum der Spirale abgezogen werden.

8. Verfahren nach Anspruch 7, **dadurch gekennzeichnet**, daß die Schichtströmungen im Zentrum der Spirale in der Höhenmitte zusammengezogen abgeführt werden.

9. Verfahren nach Anspruch 5 bis 8, **dadurch gekennzeichnet**, daß die Sink- und Schwimmstoffe in der Beruhigungsstrecke jeweils in Abtrennrichtung konisch räumlich konzentriert werden.

10. Verfahren nach Anspruch 9, **dadurch gekennzeichnet**, daß die Konzentrationsbewegung durch gleich schnell umlaufende mechanische Fördermittel unterstützt wird.

11. Verfahren nach Anspruch 1 bis 10, **dadurch gekennzeichnet,** daß zumindest der Abschnitt der Beruhigungsstrecke und/oder Trennstrecke, der von der warmen Schichtströmung durchflossen wird, auf der warmen Abwassertemperatur gehalten wird.

12. Verfahren nach Anspruch 11, **dadurch gekennzeichnet**, daß der warmgehaltene Abschnitt nach außen wärmeisoliert ist.

13. Verfahren nach Anspruch 10, 11, 12, **dadurch gekennzeichnet**, daß der warmgehaltene Abschnitt in Zeiten fehlenden Zuflusses warmer Abwässer aufgeheizt wird.

14. Verfahren nach einem oder mehreren der vorstehenden Ansprüche **dadurch gekennzeichnet**, daß die Schichtströme auf der Beruhigungsstrecke durch Krählen eingedickt werden.

15. Verfahren nach Anspruch 5, **dadurch gekennzeichnet**, daß das Abwasser in der Beruhigungsstrecke auch im mittleren Reinwasserbereich durch Krählelemente oder dgl. in langsam rotierender Bewegung gehalten wird.

16. Verfahren nach einem oder mehreren der Ansprüche 1 bis 15, **dadurch gekennzeichnet**, daß die Leichtstoffe beim Abziehen entlüftet werden.

17. Verfahren nach Anspruch 7, **dadurch gekennzeichnet**, daß die abgeschiedenen Stoffe durch Unterdruck abgezogen und durch Filtern weiter entwässert werden.

18. Verfahren nach Anspruch 17, **dadurch gekennzeichnet**, daß die Durchströmgeschwindigkeit in der Beruhigungsstrecke durch die Überhöhung des Zulaufs gegenüber dem Ablauf eingestellte wird.

19. Verfahren nach Anspruch 18, **dadurch gekennzeichnet,** daß Zu- und Ablauf gegenüber dem Leichtstoffabzug derart überhöht sind, daß die Leichtstoffe beim Öffnen des Abzugs zumindest teilweise selbsttätig austreten.

20. Verfahren nach Anspruch 19, **dadurch gekennzeichnet**, daß Zu- und Ablauf und Leichtstoffabzug an eine gemeinsame Entlüftung angeschlossen sind.

21. Verfahren nach Anspruch 20, **dadurch gekennzeichnet**, daß die Entlüftung besaugt wird.

22. Verfahren nach Anspruch 19, **dadurch gekennzeichnet**, daß der Abzug der abgetrennten Stoffe durch Zufuhr von Förderwasser unterstützt wird.

Fig.1

Fig.2

Fig. 3

Fig. 4

Fig. 5

| Europäisches Patentamt | **EUROPÄISCHER RECHERCHENBERICHT** | Nummer der Anmeldung |

EP 92 10 0223

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| A | CH-A-492 466 (G. R. GROB) <br> * Spalte 2, Zeile 5 - Zeile 15; Abbildungen * <br> --- | 1,4,5-9 | B01D17/025 <br> B01D17/038 <br> B01D21/06 |
| A,P | DE-U-9 104 255 (PASSAVANT-WERKE AG) <br><br> * das ganze Dokument * <br> --- | 1,5-9, 16,18 | B01D21/26 |
| A,D | DE-U-8 625 464 (PASSAVANT-WERKE AG) <br> * Seite 2, Absatz 1; Abbildung * <br> --- | 1,5 | |
| A | GB-A-1 141 301 (GERR. STORK & CO'S) <br><br> * Seite 2, Zeile 107 - Zeile 127; Anspruch 1; Abbildung * <br> --- | 1,5,6,9, 13 | |
| A | GB-A-2 119 668 (GOTTFRIED KRONENBERGER) <br><br> ----- | 10,14 | |

| | RECHERCHIERTE SACHGEBIETE (Int. Cl.5 ) |
|---|---|
| | B01D <br> C02F |

**Der vorliegende Recherchenbericht wurde für alle Patentansprüche erstellt**

| Recherchenort | Abschlußdatum der Recherche | Prüfer |
|---|---|---|
| DEN HAAG | 08 APRIL 1992 | MARZENKE J. |